(19) Europäisches Patentamt
European Patent Office
Office européen des brevets

(11) Publication number: 0 101 422
A2

(12) EUROPEAN PATENT APPLICATION

(21) Application number: 83850193.0

(22) Date of filing: 08.07.83

(51) Int. Cl.³: H 01 M 4/90
H 01 M 4/22, C 25 B 11/04

(30) Priority: 19.07.82 US 399877

(43) Date of publication of application:
22.02.84 Bulletin 84/8

(84) Designated Contracting States:
AT BE CH DE FR GB IT LI LU NL SE

(71) Applicant: ENERGY CONVERSION DEVICES, INC.
1675 West Maple Road
Troy Michigan 48084(US)

(72) Inventor: Venkatesan, Srinivasan
1835 Chester Road Apt. 5
Royal Oak MI 48073(US)

(74) Representative: Berglund, Gustav Arthur et al,
AWAPATENT AB Box 5117
S-200 71 Malmö(SE)

# (54) Surface modified electrode.

(57) A surface modified electrode material to act as a catalyst for the oxygen reduction reaction in a fuel cell or oxygen evolution in a water electrolysis cell including at least one transition element, preferably nickel or cobalt. The material is surface modified by soaking in an alkali metal containing solution. The material is removed from the solution and allowed to dry thereby forming an alkali metal containing film on the surface of the material. The material is thereafter heat treated in an oxygen containing atmosphere at a temperature in the range of 250°C to 450°C. The heat treatment at least partially decomposes the film forming a highly active catalytic layer on the surface of the electrode material. The catalytic layer includes an oxide of the transition element of the electrode material as well as an oxide of the alkali metal contained in the film.

EP 0 101 422 A2

0101422



# SURFACE MODIFIED ELECTRODE

The present invention relates generally to electrode substrate materials which are modified to form catalytically active surface films thereon. More specifically, the catalytic films formed by the present invention are particularly suitable for use in the oxygen reduction reaction of an alkaline fuel cell and for oxygen evolution in water electrolysis. The catalytic materials of the invention have a high density of catalytically active sites, resistance to poisoning and long operating life.

A fuel cell is an electrochemical device in which the chemical energy of a conventional fuel is converted directly and efficiently into low voltage electrical energy. Fuel cells have many potential applications such as supplying power for transportation vehicles, replacing steam turbines and remote power supply applications.

Fuel cells, like conventional batteries, operate by utilizing electrochemical reactions. Unlike a battery, in which chemical energy is stored within the cell, fuel cells generally are supplied with reactants from outside the cell. Barring failure of the electrodes, as long as the fuel, preferably hydrogen, and oxidant, typically

oxygen, are supplied and the reaction products are removed, the cell continues to operate.

Fuel cells also offer a number of important advantages over engine or generator systems. These include relatively high efficiency, environmentally clean operation especially when utilizing hydrogen as a fuel, high reliability, few moving parts, and quiet operation. Fuel cells potentially are more efficient than other conventional power sources based upon the Carnot cycle. As the world's oil supplies become depleted, hydrogen supplies remain quite abundant and offer a viable alternate source of energy. Hydrogen can be produced from coal or natural gas or can be produced without the use of fossil fuels, such as by the electrolysis of water using nuclear or solar energy.

The major components of a typical fuel cell are the anode for hydrogen oxidation and the cathode for oxygen reduction, both being positioned in a cell containing an electrolyte such as an alkaline electrolytic solution. Typically, the reactants such as hydrogen and oxygen, are respectively fed through a porous anode and cathode and brought into surface contact with the electrolytic solution. The particular materials utilized for

the cathode and anode are important since they must act as efficient catalysts for the reactions taking place.

In an alkaline fuel cell, the reaction at the anode is between the hydrogen fuel and hydroxyl ions ($OH^-$) present in the electrolyte which react to form water and release electrons: $H_2 + 2OH^- \rightarrow 2H_2O + 2e^-$. At the cathode, the oxygen, water, and electrons react in the presence of the cathode catalyst to reduce the oxygen and form hydroxyl ions ($OH^-$): ($O_2 + 2H_2O + 4e^- \rightarrow 4OH^-$). The flow of electrons is utilized to provide electrical energy for a load externally connected to the anode and cathode.

Despite the above listed potential advantages, fuel cells have not been widely utilized. Contributing to the fuel cell's lack of widescale commercial acceptance has been the relatively high cost of operating the fuel cells. The most important factor contributing to the relatively high cost of producing energy from a fuel cell are the catalytic inefficiencies of the prior art catalytic materials used for the electrodes and/or the high costs of many of these materials. The catalytic inefficiencies of the materials add to the

operating costs of the fuel cell since a lower electrical energy output for a given amount of fuel results. The use of expensive catalytic materials, such as noble metal catalysts, result in cells which are too expensive for widespread application.

The only alkaline fuel cells presently utilized are based upon noble metal catalysts and because of potential poisoning utilize ultrahigh purity fuels and electrolytes. These very expensive cells are only utilized for space applications where cost is not a factor. Virtually no commercial applications presently utilize alkaline fuel cells. For the quite limited applications to which fuel cells have been put to use, the cathode catalyst typically employed has been platinum. Platinum, despite its good catalytic properties is not very suitable for widescale commercial use as a catalyst for fuel cell cathodes because of its very high cost. As mentioned previously, the use of platinum is also undesirable since it cannot withstand contamination by impurities normally contained in the hydrogen fuel and the electrolyte of the fuel cell. These impurities typically can include carbon monoxide which may be present in

hydrogen fuel, or contaminants contained in the electrolyte such as the impurities normally contained in untreated water including calcium, magnesium, iron, copper and other heavy metals.

The above contaminants can cause what is commonly referred to as a "poisoning" effect. Poisoning is where the catalytically active sites of the material become inactivated by the poisonous species listed above. Once the catalytically active sites are inactivated, they are no longer available for acting as catalysts for efficient oxygen reduction reaction at the cathode. The catalytic efficiency of the cathode therefor is reduced since the overall number of available catalytically active sites is significantly lowered by poisoning. The decrease in catalytic activity results in increased overvoltage at the cathode and hence the cell is much less efficient adding significantly to the operating costs. Overvoltage is the voltage required to overcome the resistance to the passage of current at the surface of the cathode (charge transfer resistance).

Many non-noble metals or their oxides, especially transition elements, have also been tried as an oxygen reduction catalyst for the fuel cell

cathode reaction. Non-noble catalysts offer a definite cost advantage, and can be more resistant to poisoning. On the other hand, the non-noble metal catalysts exhibit overvoltages which are substantially higher than that exhibited by a noble metal catalyst such as platinum. Furthermore, many of the prior art catalysts formed from non-noble elements can also be susceptible to poisoning when operated in a fuel cell.

The reduction of the overvoltages and improvement of other performance parameters of transition element catalysts has been the subject of attention in the prior art. Nickel, cobalt and nickel-cobalt oxides have received much of this attention since they provide the most promising performance for oxygen reduction catalysts and are of relatively low cost. In regard to these catalysts, certain surface treatments performed thereon have been investigated.

One such study is reported in Adams et al., Fuel Cells, Academic Press, London, p. 129 (1963). That reference discloses that the corrosion resistance of duplex nickel electrodes could be improved by soaking in a lithium hydroxide solution followed by heating at 700°C in air. Ac-

cording to the reference, the treatment produces a thin surface layer of lithiated nickel oxide which has a very low concentration of nickel cation vacancies compared to pure nickel oxide and is therefore more corrosion resistant.

Another experiment also utilized nickel and lithium in the formation of a fuel cell catalyst as reported in "The Electrochemical Reduction of Oxygen and Nickel Oxide and its Solid Solutions with Lithium and Chromium Oxides", by Tseung et al., Electrochimia Acta, 1970, Vol. 15, pp. 473 to 481. That reference discloses a catalyst which was prepared by mixing nickel and lithium nitrates and then melting the mixture at 100°C while slowly raising the temperature (100°C/hr) to 600°C. The temperature was maintained at 600°C for five hours before raising the temperature to 950°C for a further three hours. The samples were then quenched by exposing to room temperature. After cooling, the samples were ground into powder for use as a catalyst.

Such catalysts, however, have been found to have performance drawbacks and have not been utilized in commercial fuel cell applications. Thus, the need remains for a low overvoltage fuel cell

cathode made from a relatively low cost catalytic material which is resistant to poisoning in a fuel cell environment.

In addition to use in a fuel cell, the materials of the present invention also can be utilized for oxygen evolution in water electrolysis. The electrolytic decomposition of water in an alkaline electrolyte has long been practiced for the production of hydrogen gas.

The electrolysis reactions and the overall reaction is represented as follows:

Cathode: $2H_2O + 2e^- \rightarrow H_2 + 2OH^-$

Anode: $2OH^- \rightarrow 1/2\ O_2 + 2e^- + H_2O$

---

Total: $H_2O \rightarrow H_2 + 1/2\ O_2$

The particular materials utilized for the anode are important since they provide the necessary catalysts for the reactions taking place at the anode and cathode. For example, the role which the anode catalyst M is believed to play in evolving oxygen in an electrolytic cell is as follows:

$$M + OH^- \rightarrow MOH + e^-$$

$$MOH + OH^- \rightarrow MO + H_2O + e^-$$

$$2MO \rightarrow MO_2 + M$$

$$MO_2 \rightarrow O_2 + M$$

As in the fuel cell the charge transfer resistance is referred to as the overvoltage which represents an undesirable energy loss which adds to the operating costs of the electrolytic cell. The anode overvoltage losses can be quite substantial in electrolytic cells. For example, for nickel anodes or nickel plated steel anodes, the materials most commonly used by the water electrolysis industry, the charge transfer resistance is on the order of 400 mV at one set of typical operating conditions, e.g., a 30% KOH electrolyte at a temperature of 80°C and current density of 2KA/$m^2$. Because such cells are used to annually produce a significantly large amount of hydrogen, the total electrical energy consumed amounts to a very substantial sum in view of the high electrical energy cost. Such a large amount of energy is consumed that even a small savings in the overvoltage such as 30-50 mV would provide a significant reduction in operating costs.

One prior art attempt to increase the catalytic activity of the anode was to increase the surface area of the cathode by the use of a "Raney"-type process. Raney nickel production involves the formation of a multi-component mixture, from

melted or interdiffused components such as nickel and aluminum, followed by the selective removal of the aluminum, to increase the actual surface area of the material for a given geometric surface area. The resulting surface area for Raney nickel anodes is on the order of 100-1000 times greater than the geometric area of the material. This is a greater surface area than the nickel and nickel plated steel anodes discussed above.

The Raney nickel anodes are very unstable and lack mechanical stability during gas evolution. The degradation reduces the operating life of Raney nickel anodes and thus they have not been widely accepted for industrial use. Furthermore, the process for producing Raney nickel is relatively costly due to the expense of the various metallurgical processes involved.

Many other anode materials have been prepared and tested at least on an experimental basis. For various reasons, however, these materials have not replaced nickel and nickel plated steel anodes as the most commonly used industrial anode materials. Some of these experimentally prepared anode materials include mixtures of nickel and other metals. The preparations have varied and include plasma

spraying a mixture of cobalt and/or nickel along with stainless steel onto a nickel or nickel coated iron substrate; subjecting a nickel molybdate material to a anodic polarization procedure to remove the molybdenum therefrom to form a finely divided nickel oxide; nickel sinters impregnated with precipitated nickel (II) hydroxide; and a spinel $NiCo_2O_4$ material prepared as a powder by freeze drying or by co-precipitation from a solution of mixed salts.

In summary, various catalytic materials for use as electrolytic cell anodes have been proposed. Nickel and nickel plated steel anodes have been most commonly commercially used. These materials are catalytically inefficient resulting in considerable overvoltages which add significantly to operating costs. Those materials which exhibit lower overvoltages, such as noble metal including catalysts, are expensive and/or subject to poisoning. Other anode materials which exclude noble metals have been proposed, but it appears that such materials do not improve the overall anode performance in terms of overvoltage savings, material costs and operating life since such prior art anodes have not been accepted to any significant

degree. Thus, there remains the need for a stable, low overvoltage anode material of low cost to replace the presently used catalytic materials for oxygen evolution in an electrolytic cell.

The disadvantages of the prior art are overcome by surface modification of non-noble electrode materials in accordance with the present invention to provide a fuel cell or electrolyzer electrode catalyst of greatly enhanced catalytic properties. The surface modification is particularly advantageous for non-stoichiometric multicomponent, disordered materials which include at least one transition element, preferably nickel or cobalt. Surface modification of such materials forms a catalyst in the form of a film or layer on the surface of the modified material. The film can provide a catalytic activity which is substantially equivalent to that of platinum, be resistant to poisoning and be of a relatively low cost.

For ease of processing, the surface modification is preferably performed on a electrode material which is prefabricated into an electrode substrate structure. As an alternative, the surface modification techniques of the present invention can also be used to create a catalytic layer on the surfaces of a bulk quantity material, such as in a powder form, which is thereafter utilized in the fabrication of an electrode.

The surface modification as practiced in the present invention includes soaking of the substrate in a solution which may be either an alkali metal salt and organic acid solution, or an alkali metal hydroxide solution. After soaking for a period of time, the substrate is removed from the solution and allowed to dry. This forms a film which includes the alkali metal salt on the surface of the electrode. Thereafter a heat treatment in an oxygen containing environment at a temperature in the range of approximately 250°C to 450°C is performed. This heat treatment decomposes the film to provide a catalytically active layer of a non-stoichiometric oxide of the transition metal or metals incorporating lithium oxide. The non-stoichiometric lithium oxide modifies the stoichiometry of the surrounding oxide of the transition metal to create a highly catalytically active layer.

In another aspect of the invention surface modification of the electrode material is accomplished electrochemically. In electrochemical surface modification, the electrode material, preferably in a substrate form, is immersed in a molten alkali metal hydroxide solution and an anodic current, of for example 500 $mA/cm^2$, is applied to the material for a short period of time, such as 5 seconds. The anodically treated electrode material is removed from the solution and allowed to cool forming a film on its surface. To complete the surface modification the electrodes are heat treated in oxygen at 250°C to 450°C to provide a catalytic film with very active oxides.

Accordingly, a first object of the invention is to provide for a fuel cell device including a first electrode means for efficient oxygen reduction, the electrode means being positioned within the cell. The first electrode means include an electrode material having a modified surface providing a catalytic layer on at least a portion of the surface of the electrode. A second electrode means capable of hydrogen oxidation is positioned in the cell and spaced from the first electrode means. An electrolyte in the cell is in contact with both the first and second electrode means.

The fuel cell device is characterized by the catalytic layer including an oxide of a transition element and an oxide of an alkali metal that modifies the structure of the transition element oxide to make it highly catalytically active.

A second object of the invention is to provide for a cell device for the electrolysis of an aqueous solution wherein oxygen gas is evolved including a first electrode means for efficient oxygen evolution, the electrode means being positioned within the cell. The first electrode means includes an electrode material having a modified surface providing a catalytic layer on at least a portion of the surface of the electrode material. A second electrode means capable of hydrogen gas evolution is positioned in the cell and spaced from the first electrode means. An electrolyte in the cell is in contact with both the first and second electrode means. The cell device is characterized by the catalytic layer including a highly active oxide of a transition element and an oxide of an alkali metal that modifies the structure of the transition element oxide to make it highly catalytically active.

A third object of the invention is to provide a method for surface modifying an electrode material characterized by soaking an electrode material including at least one transition element in an alkali metal compound solution. Remove the material from the solution and allow it to dry to form a film thereon, the film includes the alkali metal. Heat treat the material and film in an oxygen containing atmosphere at a temperature of approximately 450°C or lower to form a highly catalytically active layer on the electrode material. The layer includes an oxide of the at least one transition element and an oxide of the alkali metal, which is at least partially decomposed by the heat treatment and modifies the structure of the transition element oxide.

A fourth object of the invention is to provide a method of forming an electrochemically surface modified electrode cell characterized by immersing in a molten alkali metal hydroxide solution an electrode substrate material which includes a transition element. Next, applying an anodic current to the immersed substrate material. Remove the substrate material from the solution and allow it to cool to form a film thereon, the film includes an alkali metal. Finally, heat treat the substrate material in an oxygen containing atmosphere at a temperature of at least 250°C to form on the surface of the substrate material a highly active catalytic layer. The layer includes an oxide of the transition element and an oxide of the alkali metal.

The preferred embodiments of this invention will now be described with reference to the examples incorporated into the specification.

The electrodes of the present invention utilize materials which contain transition elements which are surface modified to enhance catalytic activity for the oxygen reduction reaction of a fuel cell or the oxygen evolution reaction of a water electrolyzer. The electrodes are designed to exhibit low overvoltages, and resistance to poisoning.

The surface modification can be performed upon the surface of an electrode material previously fabricated into a substrate. The form of the substrate may be of any suitable configuration and design conventionally used for fuel cells or electrolytic cells. The modification techniques of the present invention form a film of very active catalytic material on the surface of the electrode substrate. The materials most suitable for the

electrode substrate are transition metals, preferably nickel, cobalt or both.

Surface modification is initiated by soaking the electrode material in a room temperature chemical solution for about 15 to 70 hours. A number of different solutions can be used for successful surface modification in accordance with the present invention. Suitable soaking solutions can be categorized as falling within one of two following groups:

1) Alkali metal compound solutions which form complexes with a transition element included in the substrate subjected to the soaking, for example, complex solutions containing dissolved salts of alkali elements (preferably Li, Na, K or Cs), in solution with an organic acid (citric, acetic, formic, oxalic, etc.); or

2) solutions which react with the transition element of the substrate without becoming passivated, such as hydroxides of the alkali elements, LiOH, KOH, NaOH and CsOH, either by themselves or mixtures thereof.

After soaking, the electrode material is removed from the solution and allowed to drip-dry, forming an alkali metal salt containing film on

the surface of the electrode. The electrode with the adhering film is then subjected to a heat treatment in an oxygen environment at a temperature between 250°C to 450°C, preferably about 350°C. The heat treatment decomposes the film to form a catalytically active layer which includes oxides of the alkali element or elements as well as catalytically active oxides of the transition metal or metals contained in the electrode substrate material.

To further understand the surface modification process in greater detail it may be helpful to describe the process in connection with surface modification of a cobalt including electrode material. When a cobalt electrode is soaked in a complexing type solution, such as lithium acetate, cobalt acetate is formed at the surface of the electrode. Upon decomposition during heat treatment, a layer of a catalytically active material including mixed cobalt and lithium oxides is formed. The suggested sequence of reactions caused by the chemical soaking and heat treatment of a cobalt including substrate is shown below. It is noted that during heat treatment reactions 2 and 3 occur simultaneously.

(1) $H_2O+Li_2C_2O_4+CoO$ (surface oxide) $\rightarrow CoC_2O_4+2LiOH$

and upon heat treatment:

(2) $2CoC_2O_4+O_2 \rightarrow 2CoO+4CO_2\uparrow$

or

$3CoC_2O_4 +2O_2 \rightarrow Co_3O_4+6CO_2\uparrow$

(3) $O_2+2Li_2C_2O_4 \rightarrow 2Li_2O+4CO_2\uparrow$

As suggested in equation 1, during soaking the surface oxide of cobalt reacts with lithium oxalate to form cobalt oxalate with some lithium oxalate. During the subsequent heat treatment at temperatures within the 250°C to 450°C range a highly active cobalt oxide, such as CoO or $CO_3O_4$, is formed as shown in equation 2. At the same time $Li_2O$ is formed as shown in equation 3. The lithium oxide, while not catalytically active by itself, acts as dopant to alter the structure of the catalytic layer and thereby greatly increase its catalytic activity.

It should also be noted that surface modification of the catalyst can also be accomplished by by-passing reaction (1) and directly soaking the cobalt containing material in a mixed cobalt oxalate/lithium oxalate solution. Also, a non-cobalt based substrate can be utilized in the mixed solution to give the desired catalytic surface which

incorporates the cobalt only from the solution. These are followed by the above discussed heat treatment.

One of the many advantages of the surface modification of the present invention is that decomposition of lithium oxalate to form lithium oxide is accomplished within the temperature range of 250°C to 450°C. Heat treatment within this range provides a non-stoichiometric lithium oxide which modifies the stoichiometry of the surrounding oxides of cobalt creating a catalytically active layer.

The formation of the catalytic film at the temperatures noted above provides increased activity above that possible with the higher temperature treatments taught in the prior art. In the prior art materials, lithium hydroxide is utilized to form the lithium oxide necessitating the higher decomposition temperatures, which also results in a material having a different stoichiometric structure from that of the present invention.

Utilization of an alkali metal hydroxide soaking solution in the surface modification process of the present invention also provides a highly active mixed oxide. A better understanding

of the details of surface modification with this category of solutions can be obtained by inspection of the following suggested reactions for modification of a cobalt including material by soaking in lithium hydroxide.

(4) $CoO + 2\ LiOH \rightarrow Li_2CoO_2 + H_2O$

After formation of the cobaltite and drip-drying, the heat treatment of the thus formed film produces catalytically active mixed oxides of lithium and cobalt.

(5) $Li_2CoO_2 \rightarrow CoO + Li_2O$

(6) $O_2 + 2CoO \rightarrow 2Co_2O_3$

(7) $Co_2O_3 + CoO \rightarrow Co_3O_4$

In order to show the advantages of the present invention, a number of electrode substrates were subjected to surface modification procedures to form highly active catalytic surface layers thereon. The substrates were of a solid electrode configuration and included Ni and/or Co. After forming the catalytic surface layer by surface modification, the electrodes were tested for various applications.

For example, when testing an oxygen reduction electrode for a fuel cell, the technique of cyclic voltammetry was utilized. In such tests the electrolyte was a .2M NaOH solution at room temperature. The technique of cyclic voltammetry in an oxygen saturated solution provides a method for quickly screening the comparative performance of the catalyst formed by surface modification. Two criteria were used to evaluate the oxygen reduction performance of the electrodes. One criterion was the half-wave potential (E 1/2). The other criterion was the net current density at a given potential. The net current density due to the catalytic material was determined by subtracting the value of the current density of the cathode when operated in a deoxygenated solution from the current density value of the cathode in an oxygen saturated solution. The current densities were calculated using the geometric surface area of the cathodes tested. Of these two criteria, the E 1/2 value provides a more important indication of catalytic activity since this value is an inherent property of the catalytic material. Current density, while indicative of catalytic activity, may be improved by increasing the effective surface area of the electrode such as by leaching or changes in the electrode design morphology.

TABLE 1

Oxygen Reduction Results On Surface Modified Flat Electrodes (Heat Treatment in $O_2$ at 350°C)

| Substrate Material | Soaking Solution | E 1/2 (V) |
|---|---|---|
| Co | CsOH (Concentrated) | -0.08 |
| Co | 1M LiOH | -0.11 |
| Co | .1M Na Oxalate | -0.13 |
| Co | .1M Ca Acetate & .1M Co Acetate | -0.12 |
| Ni | .1M Li Acetate | -0.17 |

As can be seen from the representative materials of Table 1, the surface modified materials of the present invention can provide oxygen reduction catalysts of very high catalytic activity. For example, the cobalt substrate treated in a cesium hydroxide solution yielded a half-wave potential of -.08 V. This value is approximately equal to that of a platinum catalyst cathode tested under similar conditions, and is far better than the -.35 V (E 1/2) provided by an unmodified cobalt material which, for purposes of direct comparison, was also heat treated in an oxygen environment at 350°C for 30 minutes.

The net current densities obtained with the surface modified electrodes were also much improved. For example, an unmodified cobalt material, provided a net current density of approximately 30 μ A/$cm^2$ at -.1 V and approximately 300 μ A/$cm^2$ at -.25 V. A cobalt substrate modified in accordance with the present invention, however, yielded much improved net current densities being of the order of 200 to 3000 μ A/$cm^2$ at -.1 V, and approximately 1000 to 5000 μ A/$cm^2$ at -.25 V. It is noted that cesium hydroxide provided the best results among the hydroxides tested (LiOH,KOH,NaOH,CsOH). This may be a result of the larger size of the cesium atom providing a greater modification or altering of the structure of the oxides of cobalt included in the mixed oxide catalytic layer. The other hydroxides also provided very good results, however, and thus based upon cost considerations, modification by soaking in potassium hydroxide may be preferred.

Nickel substrates modified by the surface treatment of the present invention also provided catalytically active surface films having good catalytic activity. As indicated in Table 1, a nickel substrate surface modified in a lithium acetate solution yielded an E 1/2 of -.17 V, a significant improvement over unmodified nickel which had an E 1/2 of approximately -.4 V. The

surface modified nickel substrates also provided very much improved current densities when compared to an unmodified nickel electrode which was heat treated in oxygen at 350°C and tested in the same cell. The unmodified nickel catalyst provided a current density of only 6 μ A/cm$^2$ at -.1 V and 60 μ A/cm$^2$ at -.25 V, while the surface modified nickel substrate of the present invention provided a current density of the order of 30 to 300 μ A/cm$^2$ at -.1 V and 250 to 1100 μ A/cm$^2$ at -.25 V.

As stated previously, the electrode of the present invention can also be used in cells for the electrolysis of an aqueous solution, such as the electrolysis of water to produce hydrogen and oxygen. Thus, the surface modified substrates were also tested as electrodes for evolving oxygen by the electrolysis of water. The electrodes were tested in a cell having a 17% by weight NaOH electrolyte at a temperature of approximately 80°C. Current/voltage curves (Tafel) were used for evaluating performance of the electrode. In order to evaluate the performance of the surface modified electrodes of the present invention, their catalytic activity was compared to unmodified substrates of the same material as well as an un-

modified nickel sheet electrode tested under the same conditions. Nickel is a material commonly industrially used for oxygen evolution by electrolysis of water.

TABLE 2A

Results of Surface Modified
Co Foil Substrate for Oxygen Evolution

| Treatment | Savings over Ni at 1 KA/$m^2$ | 5 KA/$m^2$ |
|---|---|---|
| Untreated | 16 mV | 41 mV |
| LiOH | 53 mV | 90 mV |
| NaOH | 58 mV | 99 mV |
| CsOH | 19 mV | 54 mV |

TABLE 2B

Results of Surface Modified
Sputtered Co Substrate for Oxygen Evolution

| Treatment | Savings over Ni at 1 KA/$m^2$ | 5 KA/$m^2$ |
|---|---|---|
| Untreated | 39 mV | 66 mV |
| Air annealed | 0 mV | 0 mV |
| NaOH, 350°C | 35-75 mV | 67-110 mV |
| KOH, 350°C | 51-75 mV | 89-107 mV |
| LiOH, 450°C | 39 mV | 78 mV |

TABLE 2C

Result of Surface Modified
$Co_{50}Ni_{50}$ Substrate for Oxygen Evolution

| Treatment | Savings over Ni at 1 $KA/m^2$ | 5 $KA/m^2$ |
|---|---|---|
| Untreated | 20 mV | 46 mV |
| NaOH, 350°C | 31 mV | 58 mV |
| NaOH, 250°C | 44-56 mV | 78-89 mV |
| KOH, 350°C | 46 mV | 79 mV |
| KOH, 250°C | 61 mV | 97 mV |

As can be seen in Table 2A, 2B and 2C, surface modification to form a film catalytic material on the surface of the electrode can lower the electrical energy requirement for electrolysis. For example, Table 2A shows that modification utilizing a NaOH solution increased the voltage savings of the untreated Co foil from 41 to 99 mV. Similar savings were accomplished with surface modification of an electrode substrate having a sputtered Co surface. For example, as shown in Table 2B, surface modification in a NaOH solution and subsequent heat treatment in air at 350°C provided up to 110 mV savings over Ni at 5 $KA/m^2$. In Table 2C, results are shown for an electrode substrate surface cosputtered from a $Co_{50}No_{50}$

target. Surface modification with a KOH solution and heat treatment at 250°C provided a 97 mV savings over that obtained with a nickel electrode.

It is noted that while the substrates discussed above were subjected to the soaking step for a period of 64 hours, significantly shorter soaking periods are believed possible. For example, a cobalt substrate soaked in potassium cobaltite for twenty minutes and heat treated in oxygen at 350°C was found to have an excellent E 1/2 of -.09 V. Also, a further accelerated surface modification procedure can be accomplished by electrochemical surface modification. The electrochemical treatment is particularly applicable to substrates which include cobalt. In this procedure the electrode to be modified is immersed in a molten alkali metal hydroxide solution. An anodic current of for example 500 mA/cm$^2$ is applied to the electrode for a short period of time, such as 5 seconds. The following electrochemical reactions occur:

$$Co \rightarrow Co^{2+} + 2e^-$$

$$Co^{2+} + 4OH^- \rightarrow CoO_2^{2-} + 2H_2O$$

The anodically treated electrode is removed from the solution and allowed to cool in air in

order to freeze a layer of the melt on the electrode surface. This is followed by heat treatment in oxygen at 350°C to form a highly active mixed oxide catalyst.

In another aspect of the present invention, the surface modification method can also be used to provide catalytic materials in bulk quantities. The thus modified catalytic materials can be thereafter utilized in fabrication of electrodes, including gas diffusion type electrodes as are commonly used in fuel cells. For example, one method of preparing bulk quantities of surface modified catalyst may use a powder, or mixture of powders, including one or more transition metals. This powder can be modified by soaking in the chemical solutions discussed above. Thereafter, the powder is heat treated, such as at 350°C in oxygen, to form a catalytically active material at least on the surface of the powder. The thus formed surface modified powder material can then be mixed with conductive carbon or nickel with the proper binders like Teflon to form gas diffusion electrodes. Fabrication methods can be by the methods disclosed in the following examples, or by a variety of suitable methods as known to those skilled in the art.

Example I

325 mesh cobalt powder was heat treated in hydrogen gas at 350°C. The cobalt powder was suspended in a 4 NaOH solution for 21 hours. A carbon and charcoal support material in a 90:10 weight ratio of carbon to charcoal was added to the solution and stirred overnight. The solids were filtered from the solution and then heat treated in air at 350°C for 30 minutes. The material was washed after heat treatment and dried. One gram of this material was mixed with two grams of teflon suspension, pressed, sintered and thereafter tested as a gas diffusion type oxygen reduction cathode. The test cell utilized a 4 molar NaOH electrolyte at room temperature. The cathode provided a current of approximately 140 mV at -.25 V.

Many other procedures for preparing bulk quantity surface modified materials in accordance with the present invention are possible. In one such method the catalytic material is formed by soaking a host powder, such as a coconut shell charcoal powder, in a solution containing at least one transition element and an alkali metal, for example a cobalt acetate and lithium acetate mixture. The powder absorbs the solution and after filtering is heat treated in oxygen at approximately 350°C. This method forms a catalytically active powder which then may be mixed with a conductive carbon powder to provide better electrical conductivity. The active powder and carbon powder mixture can be applied to a substrate to fabricate

a gas diffusion cathode for a fuel cell using a proper quantity of teflon binder.

Example II

A coconut shell charcoal powder was suspended in a cobalt acetate and lithium acetate mixture. The powder was filtered out of the solution and then heat treated in oxygen to form a catalytic material having a mixture of cobalt oxide and lithium oxide. This powder was mixed with a carbon powder of good electroconductivity in a ratio of 30:70 by weight, respectively. One gram of this mixture was mixed with two grams of teflon suspension and rolled into a layer approximately .5mm thick. An expanded metal type nickel coated mild steel substrate was provided and the rolled layer was applied to the substrate by a press. The material was thereafter sintered at 325°C for 1/2 hour. The electrode was tested as a gas diffusion cathode for oxygen reduction. A current of approximately 125 mA at a voltage of -.25 V was obtained by the cathode in a test cell utilizing 4M NaOH electrolytic solution at room temperature.

While the present invention has been described in conjunction with specific embodiments, those of normal skill in the art will appreciate that numerous modifications and variations can be made without departing from the scope of the present invention, and such modifications and variations are envisioned to be within the scope of the appended claims.

CLAIMS

1. A fuel cell device including first electrode means for efficient oxygen reduction, said electrode positioned within said cell, said first electrode means including an electrode material having a modified surface providing a catalytic layer on at least a portion of the surface of said electrode; second electrode means capable of hydrogen oxidation positioned in said cell and spaced from said first electrode means; an electrolyte in said cell in contact with both said first and second electrode means; said cell device characterized by said layer including an oxide of a transition element and an oxide of an alkali metal modifying the structure of said transition element oxide to make it highly catalytically active.

2. The fuel cell according to claim 1 further characterized by said transition element being selected from the group consisting of nickel and cobalt.

3. A cell device for the electrolysis of an aqueous solution wherein oxygen gas is evolved including first electrode means for efficient oxygen evolution thereat, said electrode means including an electrode material having a modified surface providing a catalytic layer on at least a

portion of the surface of said electrode material; a cell having said first electrode means positioned therein; second electrode means capable of hydrogen gas evolution positioned in said cell and spaced from said first electrode means; an electrolyte in said cell in contact with both said first and second electrode means; said cell device characterized by said layer including a highly active oxide of a transition element and an oxide of an alkali metal modifying the structure of said transition element oxide to make it highly catalytically active.

4. The cell device according to claim 3 further characterized by said transition element being selected from the group consisting of nickel and cobalt.

5. A method for surface modifying an electrode material characterized by:

soaking an electrode material including at least one transition element in an alkali metal compound solution;

removing said material from said solution and allowing it to dry to form a film thereon, said film including said alkali metal; and

heat treating said material and film in an oxygen containing atmosphere at a temperature of approximately 450$^{o}$C or lower to form a highly catalytically active layer on said electrode material, said layer including an oxide of said at least one transition element and an oxide of said alkali metal which is at least partially decomposed by said heat treatment and modifies the structure of said transition element oxide.

6. The method according to claim 5 further characterized by said alkali metal compound solution being an alkali metal hydroxide.

7. The method according to claim 5 further characterized by said alkali metal compound solution being an alkali metal salt in solution with an organic acid.

8. The method according to claim 5 further characterized by said heat treatment being at a temperature of at least 250$^{o}$C.

9. The method according to claim 5 further characterized by said transition element being selected from the group consisting of Co and Ni.

10. The method according to claim 5 further characterized by said electrode being an oxygen reduction electrode for use in a fuel cell.

11. The method according to claim 5 further characterized by said electrode being an oxygen evolution electrode for use in a cell for the electrolysis of an aqueous solution.

12. A method of forming an electrochemically surface modified electrode cell characterized by:

immersing in a molten alkali metal hydroxide solution an electrode substrate material which includes a transition element;

applying an anodic current to said immersed substrate material;

removing said substrate material from said solution and allowing it to cool to form a film thereon, said film including an alkali metal; and

heat treating said substrate material in an oxygen containing atmosphere at a temperature of at least 250°C to form on the surface of said substrate material a highly active catalytic layer, said layer including an oxide of said transition element and an oxide of said alkali metal.

13. The method according to claim 12 further characterized by said transition element being cobalt.

14. The method according to claim 12 further characterized by said heat treatment not exceeding a temperature of approximately 400°C.

15. The method according to claim 12 further characterized by said molten solution being KOH.